# EUROPÄISCHE PATENTSCHRIFT

(11) **EP 0 925 108 B1**
(45) Veröffentlichungstag und Bekanntmachung des Hinweises auf die Patenterteilung: **30.05.2001**
(21) Anmeldenummer: 97941990.0
(22) Anmeldetag: 08.09.1997
(51) Int. Cl.: B01J 19/18, B01J 10/02

(54) **REAKTOR MIT BIEGESTEIFEM RÜHRORGAN**
REACTOR WITH A STIRRING TOOL RESISTANT TO BENDING
REACTEUR POURVU D'UN ORGANE AGITATEUR RESISTANT A LA FLEXION

(30) Priorität: 11.09.1996 US 712429
(43) Veröffentlichungstag der Anmeldung: 30.06.1999
(73) Patentinhaber: ARTEVA TECHNOLOGIES S.à.r.l., 8001 Zürich (CH)
(72) Erfinder: HEY, Hartmut, D-55283 Nierstein (DE); LOHE, Hans, D-61476 Kronberg (DE); SCHMIDT, Roland, D-55131 Mainz (DE); SHAW, Gordon, Charlotte, NC 28226-2909 (US)
(74) Vertreter: Zounek, Nikolai, Dipl.-Ing.
(86) Internationale Anmeldenummer: EP9704871
(87) Internationale Veröffentlichungsnummer: WO9810859

(56) Entgegenhaltungen:
- EP-A- 0 719 582
- DE-A- 1 595 070
- GB-A- 2 028 678

## Beschreibung

Die Erfindung betrifft eine Vorrichtung, insbesondere zur Behandlung von niederviskosen Polymerschmelzen, aufweisend einen Behälter enthaltend ein Rührorgan mit Oberflächenbildnern, wobei das Rührorgan im wesentlichen aus einer durch den Behälter geführten Trägerstruktur besteht, die als käfigförmiges Stabwerk ausgeführt ist, das Profilbalken aufweist, die parallel zur Behälterachse angeordnet sind, und wobei mindestens benachbarte Profilbalken durch Verbindungselemente miteinander verbunden sind, sowie ihre Verwendung.

Vorrichtungen der genannten Art sind bekannt, beispielsweise aus der DE 2 244 664 und der DE 1 595 070, die Vorrichtungen zur kontinuierlichen Herstellung hochmolekularer Polyalkylenterephthalate aus Vorkondensaten offenbaren.

Diese beiden bekannten Vorrichtungen sind nach einem der beiden folgenden Bauprinzipien aufgebaut: Entweder wird zur Übertragung der notwendigen Kräfte und Momente auf das Rührorgan eine zentral angeordnete Welle verwendet, auf der die Oberflächenbildner angebracht sind, oder die Kräfte bzw. Momente werden auf den Außenradius des Rührorgans übertragen, unter Nutzung der Oberflächenbildner, d.h. der verfahrenstechnischen Elemente.

In der EP-A 0 719 582 ist eine Reaktorvorrichtung für fliessfähige und höherviskose Medien beschrieben, mit einem Rotor, der über Stummelwellen drehbar in einem Gehäuse gelagert ist und ringförmige Elemente zum Bewegen und/oder Fördern des Mediums aufweist. Der Rotor ist mit einem Hohlzylinder ausgerüstet, der mit Durchbrechungen versehen ist und auf dem die ringförmigen Elemente befestigt sind. Ein Stabwerk ist nicht vorhanden.

Aus der GB-A 2 028 678 ist ein Behälter mit einem Rührorgan bekannt, wobei das Rührorgan aus einer durch den Behälter geführten Trägerstruktur besteht, auf der Oberflächenbildner angeordnet sind. Die Trägerstruktur ist als Welle ausgebildet.

Die bekannte Vorrichtung gemäß DE 2 244 664 besteht im wesentlichen aus einem liegenden Behälter mit einem Einlaß für die flüssigen Vorkondensate und einem Auslaß für das Polykondensat, aus mehreren durch Trennwände mit Durchtrittsöffnungen gebildeten Kammern mit einem gemeinsamen Dampfraum mit einem Vakuumanschluß, und aus einer einzigen längs durch den Behälter führenden Welle mit Oberflächenbildnern, die in die Kammern eingreifen. Die Oberflächenbildner dienen zur Erzeugung großer Oberflächen der Polykondensationsflüssigkeit, wie frei fallende Schleier, die die Entfernung flüchtiger Reaktionsprodukte bei der Polykondensation begünstigen. Mit solchen Vorrichtungen können zwar Polyalkylenterephthalate in bekannter Weise, und wie auch in der DE 2 244 664 beschrieben, hergestellt werden, jedoch mit folgenden Nachteilen: Herbabfallende Polykondensationsflüssigkeit bleibt auf der Achse haften und polymerisiert aus. Dies führt zu Verkrustungen, die auch abbrechen und wieder in die Polykondensa-tionsflüssigkeit zurückfallen können und zu Verschmutzungen oder Inhomogenitäten führen und so die Produktqualität verschlechtern.

Eine weitere derartige Vorrichtung offenbart die DE 1 595 070. In dieser Vorrichtung ist das Rührorgan als zylindrischer Käfig ausgebildet, und zwar wird es aus stangenförmigen Elementen gebildet, die umfangsseitig angeordnet sind, sich parallel zur Längsachse des Behälters erstrecken und über spiralförmig angeordnete, Sehnen des zylindrischen Käfigs darstellende Stäbe untereinander verbunden sind. Zur Erzeugung eines Flüssigkeitsfilmes sind innerhalb des Käfigs Drähte befestigt. Diese erstrecken sich zwischen den Schnittpunkten der Stäbe mit den stangenförmigen Elementen und liegen im wesentlichen in einer senkrechten Ebene zur Behälterachse.

Diese Vorrichtung hat den Nachteil einer geringen Biegesteifigkeit, die das Verhältnis von Länge zu Durchmesser des Behälters nach oben begrenzt, da bei Rührorganen, die im Verhältnis zum Durchmesser des Behälters zu lang sind, die stangenförmigen Elemente infolge der Durchbiegung an der Behälterwand schleifen und dadurch die Vorrichtung beschädigen. Würde man die Durchbiegung bei der Behälterkonstruktion berücksichtigen, ergäben sich in Längsrichtung unterschiedliche Randgängigkeiten (Differenz zwischen Behälterinnendurchmesser und Rühreraußendurchmesser). An Stellen zu großer Randgängigkeit wäre die Bewegung bzw. der Austausch der Polykondensationsflüssigkeit nicht mehr ausreichend gegeben. Die Folge wären Anbackungen an der Behälterwand, mit den bereits beschriebenen Nachteilen.

Der Erfindung liegt die Aufgabe zugrunde, eine Vorrichtung der eingangs genannten Art bereitzustellen, bei der die genannten Nachteile entfallen. Erfindungsgemäß geschieht dies durch eine Vorrichtung der eingangs genannten Art, die dadurch gekennzeichnet ist, daß die Verbindung der Profilbalken mit den Verbindungselementen dreieckförmig oder trapezförmig ausgeführt ist und daß die Oberflächenbildner auf der Trägerstruktur angeordnet sind. Dabei weist das Stabwerk einen Innenradius auf, der durch den Spiegel der Schmelze bestimmt ist.

In Ausgestaltung der Erfindung ist das Stabwerk eine Gitter-Rohr-Konstruktion. Zweckmäßigerweise sind die Verbindungselemente gelochte Rohre. Die Gitter-Rohr-Konstruktion kann aus parallel zur Behälterachse angeordneten Profilbalken, vorzugsweise mit Dreiecksprofil, bestehen, die durch Verbindungselemente, z.B. Rohre, miteinander verbunden sind. Sie kann an beiden Enden von einer Endscheibe begrenzt sein. die Verbindungselemente können senkrecht oder schräg zur Behälterachse stehen. Vorzugsweise bilden sie zusammen mit den Profilbalken Dreiecke aus, insbesondere gleichschenkelige oder gleichseitige Dreiecke. Die Verbindungsstelle der parallel angeordneten Profilbalken mit den verbindenden Rohren können so ausgeführt sein, daß die Anfälligkeit für Ermüdung minimiert ist, wobei auf den Profilbalken ein "Schuh" aufgeschweißt ist, auf den wiederum das Rohr angeschweißt ist. Der "Schuh" kann sowohl aus Vollmaterial bestehen als auch entsprechend dem Rohrinnendurchmesser aufgebohrt sein. Diese Konstruktion ermöglicht eine ausreichend sichere Übertragung der Biege- und Torsionsmomente. Die Anordnung der verfahrenstechnischen Elemente, der Oberflächenbildnerwie Schöpf- und Wischblätter, Lochbleche, Drahtgitter und Wehrbleche kann problemlos auf dem Stabwerk bzw. auf der Gitter-Rohr-Konstruktion erfolgen.

Die erfindungsgemäße Vorrichtung bietet folgende Vorteile: Infolge der kontinuierlichen Benetzung oder Wischung der Oberflächen werden Verkrustungen und Inhomogenitäten vermieden. Durch verstärkte Kaskadierung mit Wehrblechen kann das Verweilzeitspektrum kontrolliert werden, was ebenfalls die Produktqualität verbessert. Die Durchbiegung des Rührorgans wird verringert.

Als Werkstoffe kommen hauptsächlich die üblichen, dem Fachmann geläufigen metallischen Werkstoffe in Betracht: je nach Anwendungsfall un- oder niedriglegierte Stähle, rost- oder säurebeständige hochlegierte Stähle, bei Spezialanwendungen Nickelbasislegierungen oder Sonderwerkstoffe.

Die Vorrichtung wird erfindungsgemäß zur Erzeugung großer Flüssigkeitsoberflächen, zum Begasen, Entgasen oder Verdampfen von niederviskosen Fluiden und zur Herstellung von Polykondensaten, vorzugsweise von Polyalkylenterephthalaten verwendet.

Die Vorrichtung eignet sich des weiteren zur Behandlung von niederviskosen Fluiden, insbesondere zur Durchführung von Verfahren zur Herstellung von Polykondensaten, insbesondere Polyester wie Polyethylenterephthalat(PET), mittels Schmelzpolymerisation, vorzugweise im Viskositätsbereich von 0,15 bis 0,35 dl/g, gemessen an Lösungen in Dichloressigsäure bei 25 °C.

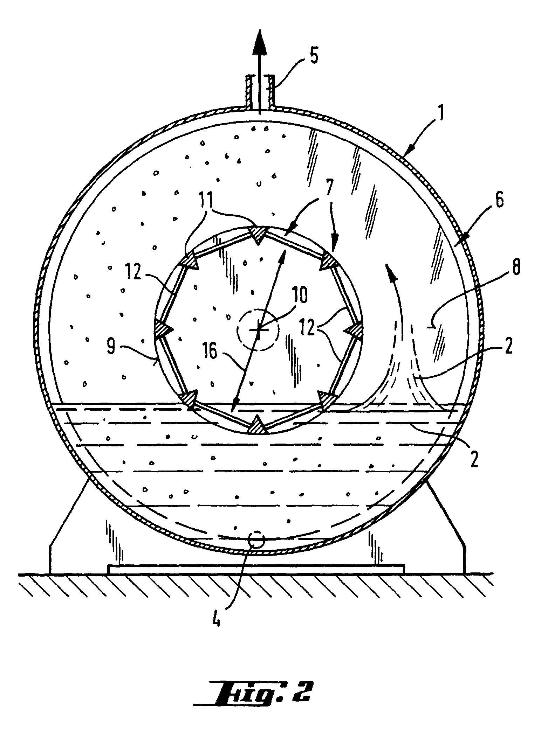

Im folgenden wird die erfindungsgemäße Vorrichtung anhand der beispielhaften Zeichnungen in den Figuren 1 bis 4 näher erläutert, ohne die Erfindung dadurch in irgendeiner Weise zu beschränken.

Es zeigt
- Fig. 1:: einen liegenden Behälter 1 mit einem Rührorgan 6 in perspektivischer Seitenansicht;
- Fig. 2:: den liegenden Behälter 1 gemäß Fig.1 im Querschnitt entlang A-A;
- Fig. 3a-c:: Detail III aus Fig. 1, gesehen von der Seite und im Schnitt (3a), gesehen von oben und vor dem Schweißen (3b) und gesehen von vorne auf die Innenseite der Endscheibe 9 (3b);
- Fig. 4:: Detail IV aus Fig. 1.

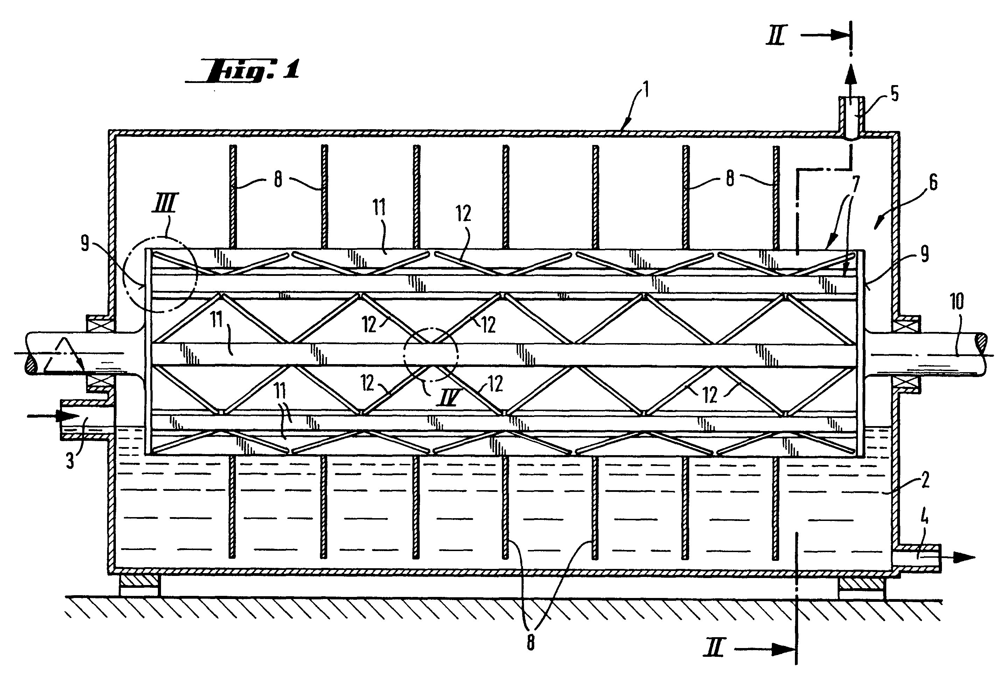

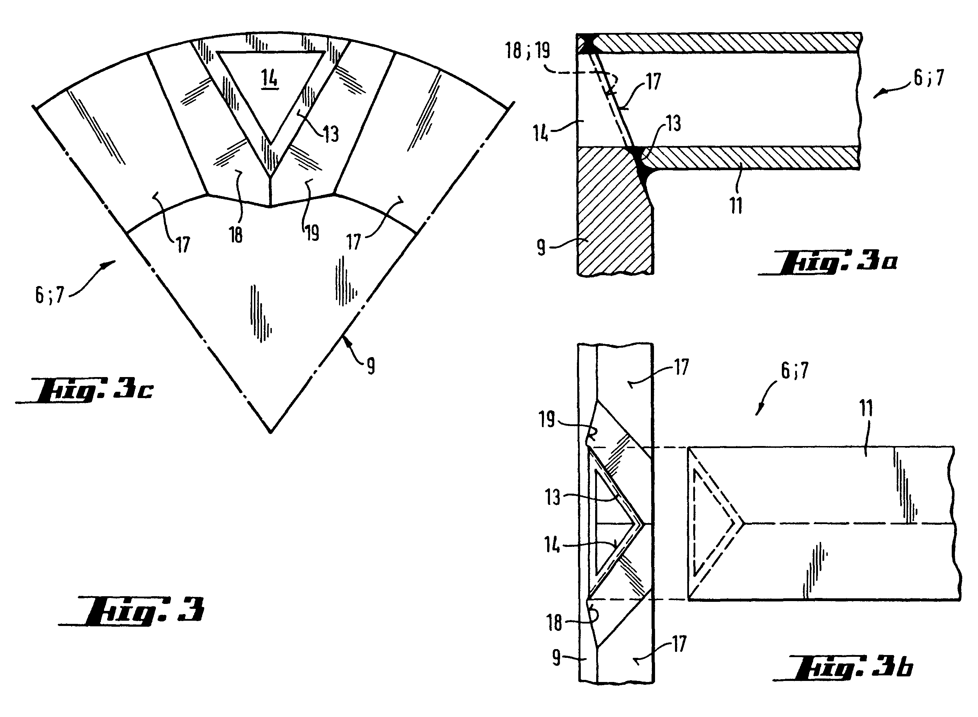

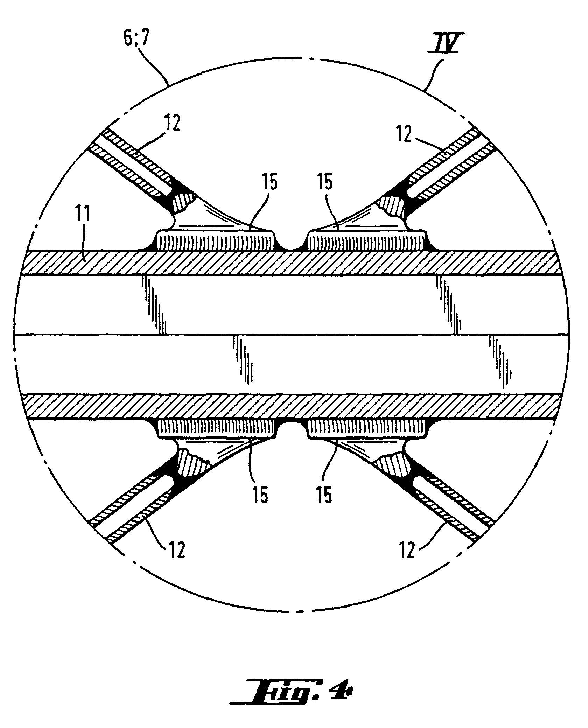

Figur 1 zeigt eine erfindungsgemäß bevorzugte Ausgestaltung, wobei ein liegender Behälter 1 zur Behandlung einer Polykondensationsflüssigkeit 2, mit einem Eingang 3 und einem Ausgang 4 für die Flüssigkeit 2 und einem Ausgang 5 für die gasförmigen Polykondensationsprodukte, ein beidseitig drehbar gelagertes Rührorgan 6 enthält. Das Rührorgan 6 besteht erfindungsgemäß aus einem der Kraftübertragung dienenden, käfigförmigen Stabwerk 7, auf dem Oberflächenbildner 8 angeordnet sind. Das käfigförmige Stabwerk 7 besteht im wesentlichen aus zwei Endscheiben 9, die durch parallel zur Längsachse 10 des Behälters 1 angeordnete Profilbalken 11 miteinander verbunden sind. Benachbarte Profilbalken 11 sind durch Rohre 12 so miteinander verbunden, daß ein Netzwerk aus Dreiecken entsteht. Sowohl die Verbindung der Balken 11 mit den Endscheiben 9 als auch die Verbindung der Balken 11 mit den Rohren 12 ist hinsichtlich der Ermüdungsfestigkeit optimiert, und zwar vorzugsweise entsprechend der in den Figuren 3a,b,c bzw. 4 dargestellten Ausgestaltungsformen. Gemäß Fig. 3a ist in die Endscheibe 9 eine Schweißlippe 13 eingearbeitet, auf die der Balken 11 (Dreiecksprofil) aufgesetzt und infolge eines Durchbruchs 14 beidseitig angeschweißt werden kann. Dabei wird die Schweißlippe 13 durch eine konisch umlaufende Abschrägung 17 der Endscheibe 9, zwei nutenförmigen Vertiefungen 18,19 sowie dem Durchbruch 14 gebildet. Entsprechend Fig. 3b ist die Verbindung von Rohr 12 und Balken 11 über einen "Schuh" 15 realisiert. Dieser Schuh 15 kann auch aufgebohrt sein. Der Innendurchmesser 16 des Stabwerks 7 ist so bemessen, daß im Verlauf einer Umdrehung des Rührorgans 6 alle Balken 11 und alle Rohre 12 in die Polykondensationsflüssigkeit eintauchen.

## Patentansprüche

1. Vorrichtung, insbesondere zur Behandlung von niederviskosen Polymerschmelzen, aufweisend einen Behälter (1) enthaltend ein Rührorgan (6) mit Oberflächenbildnern, wobei das Rührorgan (6) im wesentlichen aus einer durch den Behälter geführten Trägerstruktur besteht, die als käfigförmiges Stabwerk (7) ausgeführt ist, das Profilbalken (11) aufweist, die parallel zur Behälterachse angeordnet sind, und wobei mindestens benachbarte Profilbalken (11) durch Verbindungselemente (12) miteinander verbunden sind, dadurch gekennzeichnet, daß die Verbindung der Profilbalken (11) mit den Verbindungselementen (12) dreiecksförmig oder trapezförmig ausgeführt ist und daß die Oberflächenbildner (8) auf der Trägerstruktur (7) angeordnet sind.

2. Vorrichtung nach Anspruch 1, dadurch gekennzeichnet, daß das Stabwerk (7) einen Innenradius (16) aufweist, der durch den Spiegel der Schmelze (2) bestimmt ist.

3. Vorrichtung nach Anspruch 1 oder 2, dadurch gekennzeichnet, daß das Stabwerk (7) eine Gitter-Rohr-Konstruktion ist.

4. Vorrichtung nach einem oder mehreren der vorstehenden Ansprüche, dadurch gekennzeichnet, daß die Verbindungselemente (12) gelochte Rohre sind.

5. Vorrichtung nach einem oder mehreren der vorstehenden Ansprüche, dadurch gekennzeichnet, daß die dreiecksförmige Verbindung die Form eines gleichschenkeligen Dreiecks, bevorzugt eines gleichseitigen Dreiecks hat.

6. Verwendung einer Vorrichtung nach einem oder mehreren der vorstehenden Ansprüche zur Erzeugung großer Flüssigkeitsoberflächen.

7. Verwendung einer Vorrichtung nach einem oder mehreren der Ansprüche 1 bis 5 zum Begasen, Entgasen oder Verdampfen von niederviskosen Fluiden.

8. Verwendung einer Vorrichtung nach einem oder mehreren der Ansprüche 1 bis 5 zur Herstellung von Polykondensaten, vorzugsweise von Polyalkylenterephthalaten.

## Claims

1. A device, in particular for the treatment of low-viscosity polymer melts, having a vessel (1) containing a stirrer element (6) with surface formers, the stirrer element (6) essentially comprising a support structure which passes through the vessel, which support structure is designed as a cage-like rod frame (7) which has profiled beams (11) which are arranged parallel to the vessel axis, and at least neighboring profiled beams (11) are mutually connected by connecting elements (12), wherein the connection of the profiled beams (11) by the connecting elements (12) is made in the form of a triangle or in the form of a trapezium and wherein the surface formers (8) are arranged on the support structure (7).

2. A device as claimed in claim 1, wherein the rod frame (7) has an inside radius (16) which is determined by the level of the melt (2).

3. The device as claimed in claim 1 or 2, wherein the rod frame (7) is a tube-grid structure.

4. A device as claimed in one or more of the preceding claims, wherein the connecting elements (12) are perforated tubes.

5. A device as claimed in one or more of preceding claims, wherein the triangular connection has the shape of an isosceles triangle, preferably of an equilateral triangle.

6. The use of a device according to one or more of the preceding claims for generating large surface areas of a liquid.

7. The use of a device according to one or more of claims 1 to 5 for the gas treatment, degassing or vaporizing of low-viscosity fluids.

8. The use of a device according to one or more of claims 1 to 5 for the preparation of polycondensates, preferably of polyalkylene terephthalates.

## Revendications

1. Dispositif, en particulier pour le traitement de masses polymères fondues de faible viscosité, présentant un récipient (1) contenant un organe agitateur (6) avec des formateurs de surfaces, dans lequel l'organe agitateur (6) est constitué essentiellement d'une structure de support guidée à travers le récipient et qui se présente sous la forme d'un système de barres en forme de cage (7), qui présente des poutres profilées (11), qui sont agencées parallèlement à l'axe du récipient, et dans lequel au moins des poutres profilées voisines (11) sont reliées l'une à l'autre par des éléments de raccordement (12), caractérisé en ce que le raccordement des poutres profilées (11) par les éléments de raccordement (12) se présente sous une forme triangulaire ou trapézoïdale et en ce que les formateurs de surfaces (8) sont agencés sur la structure de support (7).

2. Dispositif selon la revendication 1, caractérisé en ce que le système de barres (7) présente un rayon interne (16) qui est déterminé par le niveau de la masse fondue (2).

3. Dispositif selon la revendication 1 ou 2, caractérisé en ce que le système de barres (7) est une structure de tube en treillis.

4. Dispositif selon l'une ou plusieurs des revendications précédentes, caractérisé en ce que les éléments de raccordement (12) sont des tubes perforés.

5. Dispositif selon l'une ou plusieurs des revendications précédentes, caractérisé en ce que le raccordement de forme t-iangulaire a la forme d'un triangle isocèle, de préférence d'un triangle équilatéral.

6. Utilisation d'un dispositif selon l'une ou plusieurs des revendications précédentes pour la production de grandes surfaces de liquides.

7. Utilisation d'un dispositif selon l'une ou plusieurs des revendications 1 à 5 pour le gazage, le dégazage ou la vaporisation de fluides faiblement visqueux.

8. Utilisation d'un dispositif selon l'une ou plusieurs des revendications 1 à 5 pour la production de polycondensats, de préférence de poly(téréphtalate d'alkylène).
